# EUROPEAN PATENT SPECIFICATION

(11) **EP 4 322 241 B1**
(45) Date of publication and mention of the grant of the patent: **03.09.2025**
(21) Application number: 23751243.9
(22) Date of filing: 24.03.2023
(51) Int. Cl.: H01M 4/04, B21D 13/04

(54) **ELECTRODE PLATE EXTENSION DEVICE AND ELECTRODE PLATE MANUFACTURING APPARATUS**
VORRICHTUNG ZUR ELEKTRODENPLATTENVERLÄNGERUNG UND VORRICHTUNG ZUR ELEKTRODENPLATTENHERSTELLUNG
DISPOSITIF D'EXTENSION DE PLAQUE D'ÉLECTRODE ET APPAREIL DE FABRICATION DE PLAQUE D'ÉLECTRODED'ÉLECTRODE

(30) Priority: 15.06.2022 CN 202210675902
(43) Date of publication of application: 14.02.2024
(73) Proprietor: Contemporary Amperex Technology (Hong Kong) Limited, Central, Central And Western District (HK)
(72) Inventor: QU, Jiangjiang, Ningde, Fujian 352100 (CN); LI, Diwu, Ningde, Fujian 352100 (CN); CHEN, Weigang, Ningde, Fujian 352100 (CN); Yang, Bingzi, Ningde, Fujian 352100 (CN); SHANG, Hongwu, Ningde, Fujian 352100 (CN)
(74) Representative: Rowlands, Stuart Michael
(86) International application number: PCT/CN2023/083815
(87) International publication number: WO 2023/241156

(56) References cited:
- CN-A- 110 890 519
- CN-A- 112 563 445
- CN-U- 212 400 425
- CN-U- 212 400 425
- CN-U- 214 872 873
- CN-U- 215 816 000
- CN-U- 216 262 704
- CN-U- 216 262 704
- DE-A1- 2 413 548
- JP-A- 2019 033 041
- JP-A- H0 528 990

## Description

### Technical Field

The present application relates to the technical field of batteries, and in particular to a system comprising an electrode plate extension device and an electrode plate and an electrode plate manufacturing apparatus comprising such a system.

### Background Art

Achieving energy conservation and emission reduction is the key to the sustainable development of the automotive industry. Electric vehicles have become an important part of the sustainable development of the automotive industry due to their advantages in energy conservation and being more environmentally friendly. For the electric vehicles, battery technology is an important factor to their development.

CN216262704U, which forms the basis for the preamble of claim 1, relates to a rolling device comprising a first roller and a second roller, and the first roller and the second roller are arranged on the two sides of the pole piece in the thickness direction. The first roller is provided with a plurality of concave parts, the pole piece comprises a plurality of insulating coating areas and a plurality of tabs, and in the projection in the thickness direction of the pole piece, at least part of the insulating coating areas and the projection of the tabs are located in the projection range of the concave parts.

JP2019033041A relates to an electrode sheet manufacturing device comprising a conveying device that conveys an electrode material; and a press device 40 that presses the electrode material. The press device comprises a pair of press roles. The first press role comprises a first convex part fitted with a second concave part through an uncoated part. The second press role comprises the second convex part fitted to the first concave part through the uncoated part. The first convex part and the first concave part are provided through a whole periphery of the first press role. The second convex part and the second concave part are provided through the whole periphery of the second press role.

CN212400425U relates to a cold pressing extension mechanism comprising a traction assembly and a compression roller assembly which are arranged along the conveying path of the cold pressing extension mechanism. The traction assembly is used for pulling the first part of thefilm in the width direction and comprises a first driven roller and a first driving roller which are arranged in pairs, the first driving roller is used for being in transmission connection with a first driving device, and the first driven roller is used for rotating along with movement of the film.

DE2413548A1 relates to a method of controlling the shape of rolled objects in the rolling of plate, sheet, strip and the like through the adjustment of the quantity of a crown made on the rolling roll by heating the inside of the center hole made along the center axis of the rolling roll.

In the development of battery technology, how to improve the production efficiency of batteries is an urgent technical problem to be solved in the battery technology.

### Summary of the Invention

The present invention provides a system comprising an electrode plate extension device and an electrode plate, along with an electrode plate manufacturing apparatus, which can improve the production efficiency of batteries.

In a first aspect, the present invention provides a system as set out in claim 1.

In the above solution, when the electrode plate passes between the first roller and the second roller, the protrusion acts on the uncoated region and exerts a certain pressure on the uncoated region, and with the support of the groove on the uncoated region, the uncoated region is subjected to plastic deformation while ensuring the safety, thereby achieving the effects of flattening folds of the uncoated region and extending the uncoated region. Therefore, the risk of breaking the electrode plate in the subsequent cold-pressing procedure is reduced, the production capacity of electrode plates is improved, and thus the production efficiency of batteries is improved.

According to some embodiments of the present invention, the protrusion has a complementary shape to the groove.

In the above solution, the uncoated region is subjected to plastic deformation under the action of the pressure of the protrusion to fit a surface of the groove, so that the folds of the uncoated region are effectively flattened, and the uncoated region is extended.

According to some embodiments of the present invention, a surface of the protrusion has an arc-shaped transition into the outer peripheral surface of the first body, and a surface of the groove has an arc-shaped transition into the outer peripheral surface of the second body.

In the above solution, since the surface of the protrusion has an arc-shaped transition into the outer peripheral surface of the first body, and the surface of the groove has an arc-shaped transition into the outer peripheral surface of the second body, it is possible to avoid damage to the uncoated region that is caused by a large height difference between the uncoated region and the coated region of the electrode plate after the uncoated region is subjected to a depressing tension from the protrusion, thereby ensuring the safety of the electrode plate.

According to some embodiments of the present invention, a dimension of the protrusion in a length direction of the first roller is W, which satisfies 20 mm ≤ W ≤ 80 mm.

In the above solution, the protrusion has a width greater than or equal to 20 mm and less than or equal to 80 mm, so as to correspond to widths of the uncoated regions on electrode plates of different specifications.

According to some embodiments of the present invention, a dimension by which the protrusion protrudes from the outer peripheral surface of the first body is H, which satisfies 2 mm ≤ H ≤ 9 mm.

In the above solution, since a different extension rate of the uncoated region is required to reach for the electrode plate of each specification, the height range of the protrusion is limited, the different heights of the protrusions indicate different extension rates obtained after the uncoated region is rolled by the protrusions, and the greater the height of the protrusion, the greater the extension rate.

According to some embodiments of the present invention, a plurality of protrusions are provided, which are distributed at intervals in an axial direction of the first body; and a plurality of grooves are provided, which are distributed at intervals in an axial direction of the second body, and which are in one-to-one correspondence with the protrusions.

In the above solution, by providing the plurality of protrusions and the plurality of grooves to roll a plurality of uncoated regions on the electrode plate simultaneously, the efficiency of solving the problems relating to folds and extensing the uncoated regions are effectively improved, the production capacity of electrode plates is improved, and thus the production efficiency of batteries is improved.

According to some embodiments of the present invention, the electrode plate extension device further comprises: a heating portion, configured to heat the uncoated region.

In the above solution, by heating the uncoated region, the residual stress and tensile strength of the uncoated region are reduced, and the flexibility is improved, so as to ensure that when the protrusion and the groove act on the uncoated region, the uncoated region can be subjected to plastic deformation under a small depressing tension so as to be extended and stretched, then the folds of the uncoated region are effectively flattened, the risk of breakage of the electrode plate in the subsequent cold-pressing procedure is reduced, and the production capacity of electrode plates is improved.

According to some embodiments of the present invention, the heating portion is arranged inside the first body and/or the second body.

In the above solution, when the electrode plate passes between the first roller and the second roller, the heating portion inside the first body and/or the second body may heat the uncoated region to improve the extension and stretching efficiency of the uncoated region. Moreover, since the heating portion is arranged inside the first body and/or the second body, it is possible that the electrode plate extension device has a compact structure and a low space occupancy, thereby avoiding wasting space.

According to some embodiments of the present invention, the heating portion is independent of the first roller and the second roller.

In the above solution, since the heating portion is independent of the first roller and the second roller, it is possible to heat the uncoated region independently, to ensure the heating effect of the uncoated regions. Moreover, since there is no need for the first roller and the second roller to be provided with the heating portion, the first roller and the second roller have a simple structure, and the manufacturing cost of the first roller and the second roller is effectively reduced.

According to some embodiments of the present invention, in a feeding direction of the electrode plate, the heating portion is arranged upstream of the first roller and the second roller.

In the above solution, as the electrode plate passes between the first roller and the second roller, the uncoated region of the electrode plate is heated by the heating portion, so that the residual stress and tensile strength of the uncoated region are reduced, and the flexibility is improved. Therefore, when the protrusion and the groove act on the uncoated region, the uncoated region can be subjected to plastic deformation under a small depressing tension so as to be extended and stretched, then the folds of the uncoated region are effectively flattened, the risk of breakage of the electrode plate in the subsequent cold-pressing procedure is reduced, and the production capacity of electrode plates is improved.

According to some embodiments of the present invention, the heating portion is a magnetic induction heating portion or a far infrared heating portion.

In the present invention, the electrode plate extension device further comprises: a third roller, located on the side of the second roller facing away from the first roller, and configured to support the second roller.

In the above solution, the third roller is an idler roller, which is configured to support the weight of the second roller and the first roller, so that the first roller stably exerts a depressing tension to the uncoated region, and the effective plastic deformation of the uncoated region is ensured.

According to some embodiments of the present invention, one of the first roller and the second roller is a driving roller and the other is a driven roller.

In the above solution, when the first roller is the driving roller and the second roller is the driven roller, the first roller rotates actively to provide the depressing tension for the uncoated region, and the second roller is rotated passively to provide support for the uncoated region. Alternatively, when the first roller is the driven roller and the second roller is the driving roller, the second roller rotates actively, provides support for the uncoated region, and drives the first roller to rotate such that the first roller provides the depressing tension for the uncoated region.

According to some embodiments of the present invention, the electrode plate extension device further comprises: an adjusting mechanism, connected to the driving roller and configured to adjust a tension exerted by the driving roller to the electrode plate.

In the above solution, by adjusting the tension exerted by the driving roller to the electrode plate through the adjusting mechanism, it is possible to adjust the extension rate of the uncoated region, so as to adapt to the requirements of electrode plates of different specifications.

In a second aspect, the present invention further provides an electrode plate manufacturing apparatus, comprising: a system according to any embodiment in the first aspect; and a cold-pressing device, configured to cold-press an electrode plate, the cold-pressing device being arranged downstream of the electrode plate extension device in a feeding direction of the electrode plate.

In the above solution, after an uncoated region of the electrode plate is subjected to extension and fold removal by the electrode plate extension device, it is possible to reduce the risk of breakage of the electrode plate during cold-pressing in the cold-pressing device, thereby improving the production capacity of electrode plates.

Some of the additional aspects and advantages of the present invention will be set forth in the following description, and some will become apparent from the following description, or be learned by practice of the present application.

### Brief Description of the Drawings

In order to more clearly describe the technical solutions of the embodiments of the present invention, the accompanying drawings required in the embodiments will be described briefly below. It should be understood that the following accompanying drawings illustrate only some embodiments of the present invention and therefore should not be construed as a limitation on the scope thereof.
FIG. 1 is a schematic diagram of an electrode plate extension device for use in a system according to some embodiments of the present invention.
FIG. 2 is a perspective view of an electrode plate extension device for use in a system according to some embodiments of the present invention.
FIG. 3 is an enlarged view of part A in FIG. 1.
FIG. 4 is a schematic diagram of a protrusion and a groove for use in a system according to some embodiments of the present invention.
FIG. 5 is a schematic diagram of a protrusion and a groove for use in a system according to some other embodiments of the present invention.
FIG. 6 is a schematic diagram of a protrusion and a groove of an arc-edge and right-angled type for use in a system according to some embodiments of the present invention.
FIG. 7 is a schematic diagram of a protrusion and a groove of a semi-straight-edge and round-cornered type for use in a system according to some embodiments of the present invention.
FIG. 8 is a schematic diagram of a protrusion and a groove of a straight-edge and round-cornered type for use in a system according to some embodiments of the present invention.
FIG. 9 is a schematic diagram of a protrusion and a groove of a straight-edge and right-angled type for use in a system according to some embodiments of the present invention.
FIG. 10 is a schematic diagram of an electrode plate for use in a system according to some embodiments of the present invention.
FIG. 11 is a perspective view of an electrode plate extension device for use in a system according to some other embodiments of the present invention.

List of reference signs: 10 - First roller; 11 - First body; 12 - Protrusion; 20 - Second roller; 21 - Second body; 22 - Groove; 30 - Heating portion; 40 - Third roller; 120 - Straight section; 121 - Arc section; 122 - First section; 123 - Second section; 124 - Arc-shaped section; 125 - Straight edge section; 126 - Third section; 127 - Fourth section; 100 - Electrode plate; 101 - Uncoated region; 102 - Coated region.

### Detailed Description of Embodiments

In order to make the objectives, technical solutions and advantages of embodiments of the present invention clearer, the technical solutions in the embodiments of the present invention will be described clearly and completely below with reference to the accompanying drawings in the embodiments of the present application. It will be apparent that the embodiments described are some of, rather than all of, the embodiments of the present invention.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise", "have" and any variations thereof in the description and the claims of the present application as well as the brief description of the drawings described above are intended to cover non-exclusive inclusion. The terms "first", "second", etc. in the description and the claims of the present application or the foregoing accompanying drawings are used for distinguishing between different objects, rather than describing a particular order or a primary-secondary relationship.

In the present application, "embodiment" mentioned means that the specific features, structures or characteristics described in conjunction with the embodiments may be included in at least one embodiment of the present invention. The phrase at various locations in the description does not necessarily refer to the same embodiment, or an independent or alternative embodiment mutually exclusive of another embodiment. Those skilled in the art should understand, in explicit and implicit manners, that an embodiment described in the present application may be combined with another embodiment.

In the description of the present application, it should be noted that, the terms "mounted", "connected", "connect", or "attached" should be interpreted in a broad sense unless otherwise explicitly defined and limited. For example, they may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: A exists, both A and B exist, and B exists. In addition, the character "/" in the present application generally indicates that the associated objects before and after the character are in a relationship of "or".

In the present application, "a plurality of" means two or more (including two), similarly, "a plurality of groups" means two or more groups (including two groups), and "a plurality of pieces" means two or more pieces (including two pieces).

A battery mentioned in the present application refers to a single physical module comprising one or more battery cells to provide a higher voltage and capacity. For example, the battery mentioned in the present application may include a battery module, a battery pack, etc.

The battery cell comprises an electrode assembly and an electrolyte solution. The electrode assembly is composed of a positive electrode plate, a negative electrode plate, and a separator. The battery cell operates mainly by relying on movements of metal ions between the positive electrode plate and the negative electrode plate. The positive electrode plate comprises a positive current collector and a positive active material layer, a surface of the positive current collector is coated with the positive active material layer, a portion of the current collector that is not coated with the positive active material layer protrudes from a portion of the current collector that is coated with the positive active material layer, and the portion of the current collector that is not coated with the positive active material layer serves as a positive tab. Taking a lithium-ion battery as an example, the material of the positive current collector may be aluminum, and the positive active material may be lithium cobalt oxides, lithium iron phosphate, ternary lithium or lithium manganate, etc. The negative electrode plate comprises a negative current collector and a negative active material layer, a surface of the negative current collector is coated with the negative active material layer, a portion of the current collector that is not coated with the negative active material layer protrudes from a portion of the current collector that is coated with the negative active material layer, and the portion of the current collector that is not coated with the negative active material layer serves as a negative tab. The material of the negative current collector may be copper, and the negative active material may be carbon, silicon, etc. In order to ensure that no fusing occurs when a large current passes, a plurality of positive tabs are stacked together, and a plurality of negative tabs are stacked together. The separator has electronic insulation and is configured to isolate the adjacent positive electrode plate and negative electrode plate to prevent a short circuit between the adjacent positive electrode plate and negative electrode plate. The separator has a large number of through micropores, which can ensure the free passage of electrolyte ions and have good permeability to lithium ions, so the separator substantially cannot block the lithium ions. The separator may be made of PP (polypropylene), PE (polyethylene), etc.

A preparation process of an electrode plate generally comprises slurry preparation, coating, cold-pressing, tab die-cutting and other procedures. The coating procedure comprises applying the stirred active material to the current collector, such that the current collector has a coated region coated with the active material layer and an uncoated region not coated with the active material layer, and the uncoated region serves as a tab after being subjected to treatment (for example, through the tab die-cutting procedure). Generally, in order to improve the coating efficiency, a roller coating process is often used. The term 'roller coating' may be interpreted a rotating roller serves as a carrier of the active material, the active material forms a wet film with a certain thickness on a surface of the rotating roller, and then the surface of the current collector is coated with the active material by means of contact of the rotating roller with the current collector during rotating. The cold-pressing procedure is to roll an electrode plate with the active material adhered thereto by a cold-pressing device, so that the coated material is tighter, the energy density is increased, and the consistency of thickness is ensured; and dust and humidity are also further controlled.

In the development of battery technology, how to improve the production efficiency of batteries is an urgent technical problem to be solved in the battery technology.

As mentioned above, the coating efficiency may be improved through the roller coating process, however, electrode plates subjected to coating by using the roller coating process are prone to electrode plate breakage in the cold-pressing procedure. The inventors have found that the reason for the occurrence of electrode plate breakage is that in the coating procedure, the coated region is subjected to pressure from the rotating roller, while the uncoated region is not subjected to the pressure from the rotating roller, resulting in different extension rates between the coated region and the uncoated region, and causing the production of folds in the uncoated region, so the electrode plate is prone to breakage in the cold-pressing procedure, affecting the production capacity of electrode plates.

In view of this, in order to reduce the risk of breakage of electrode plates in the cold-pressing procedure and improve the production capacity of the electrode plates, after thorough research, the inventors have designed an electrode plate extension device, comprising a first roller and a second roller. The first roller comprises a first body and a protrusion. The protrusion is provided on an outer peripheral surface of the first body and extends in a circumferential direction of the first body. The second roller comprises a second body and a groove. The groove is provided in an outer peripheral surface of the second body and extends in a circumferential direction of the second body. The first roller and the second roller are arranged in parallel, an electrode plate passes between the first roller and the second roller so as to be fed, and the protrusion and the groove correspond to two opposite sides of uncoated region of the electrode plate in a thickness direction respectively. When the electrode plate is fed between the first roller and the second roller, the uncoated region may be subjected to plastic deformation under the combined action of the protrusion and the groove so as to flatten folds of the uncoated region. Moreover, the uncoated region is extended, so that the extension rate of the uncoated region is consistent with or approximatively consistent with that of the coated region.

In the above solution, the first body and the second body correspond to two opposite sides of the coated region of the electrode plate in the thickness direction, and the protrusion and the groove correspond to the two opposite sides of the uncoated region of the electrode plate in the thickness direction. When the electrode plate is fed between the first roller and the second roller, the protrusion protruding from the first body may act on the uncoated region and exert a certain pressure on the uncoated region, and with the support of the groove on the uncoated region, the uncoated region is subjected to plastic deformation while ensuring the safety, thereby achieving the effects of flattening folds of the uncoated region and extending the uncoated region. Therefore, the risk of breakage of the electrode plate in the subsequent cold-pressing procedure is reduced, the production capacity of electrode plates is improved, and thus the production efficiency of batteries is improved.

The electrode plate extension device disclosed in the embodiments of the present invention is configured for fold removal and extension of the uncoated region of the electrode plate. The electrode plate extension device may be part of the structure of an electrode plate manufacturing apparatus. The electrode plate manufacturing apparatus may further comprise the cold-pressing device. The electrode plate may be cold-pressed by the cold-pressing device after being operated by the electrode plate extension device, completing the cold-pressing procedure of the electrode plate.

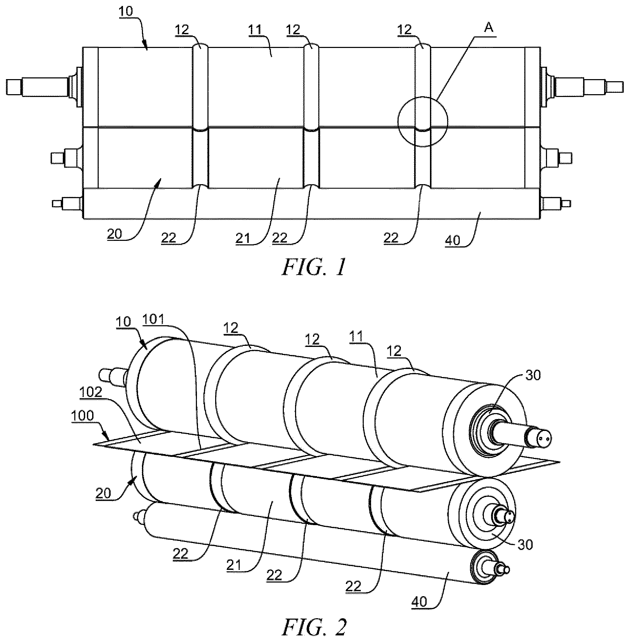

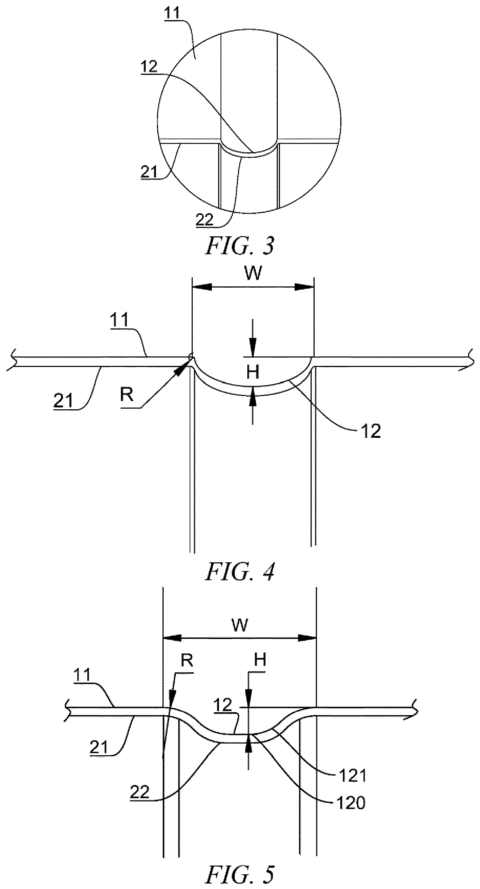

According to some embodiments of the present invention, referring to FIGS. 1 to 4, FIG. 1 is a schematic diagram of an electrode plate extension device for use in a system according to some embodiments of the present invention, FIG. 2 is a perspective view of the electrode plate extension device for use in as system according to some embodiments of the present invention, FIG. 3 is an enlarged view of part A in FIG. 1, and FIG. 4 is a schematic diagram of a protrusion 12 and a groove 22 for use in as system according to some embodiments of the present invention.

The electrode plate extension device comprises a first roller 10 and a second roller 20. The first roller 10 comprises a first body 11 and a protrusion 12. The protrusion 12 is provided on an outer peripheral surface of the first body 11 and extends in a circumferential direction of the first body 11. The second roller 20 comprises a second body 21 and a groove 22. The groove 22 is provided in an outer peripheral surface of the second body 21 and extends in a circumferential direction of the second body 21. The first roller 10 and the second roller 20 are arranged in parallel. A gap for allowing the passage of an electrode plate 100 is formed between the first roller 10 and the second roller 20. The protrusion 12 is positioned corresponding to the groove 22, and the protrusion 12 is configured to press against an uncoated region 101 of the electrode plate 100 to cause a plastic deformation of the uncoated region 101.

The first roller 10 is a component arranged opposite the second roller 20, central axes of the first roller 10 and the second roller 20 are parallel to each other, and the gap for allowing the passage and feeding of the electrode plate 100 is reserved between the first roller and the second roller. The first roller 10 and the second roller 20 may be arranged in such a way that the first roller 10 is located above the second roller 20; alternatively, the first roller 10 is located below the second roller 20. Optionally, the embodiments of the present invention are described by taking the example that the first roller 10 is located above the second roller 20.

The first body 11 is in a cylindrical shape, and a central axis thereof is the central axis of the first roller 10. The protrusion 12 protrudes from the outer peripheral surface of the first body 11 and encircles the first body 11. The protrusion 12 corresponds to the uncoated region 101 of the electrode plate 100, and the first body 11 corresponds to a coated region 102 of the electrode plate 100. That is, when the electrode plate 100 passes between the first roller 10 and the second roller 20, the protrusion 12 acts on a surface of the uncoated region 101 of the electrode plate 100, and the first body 11 acts on a surface of the coated region 102 of the electrode plate 100.

The second body 21 is in a cylindrical shape, and a central axis thereof is the central axis of the second roller 20. The groove 22 is recessed from the outer peripheral surface of the second body 21 and encircles the second body 21. The groove 22 corresponds to the surface of the uncoated region 101 facing away from the protrusion 12, and the second body 21 corresponds to the surface of the coated region 102 facing away from the first body 11.

By plastic deformation is meant that when the protrusion 12 and the groove 22 act on the uncoated region 101, folds of the uncoated region 101 can be flattened, and the uncoated region 101 is extended.

In the above solution, when the electrode plate 100 passes between the first roller 10 and the second roller 20, the protrusion 12 acts on the uncoated region 101 and exerts a certain depressing tension on the uncoated region 101, and with the support of the groove 22 on the uncoated region 101, the uncoated region 101 is subjected to plastic deformation while ensuring the safety, thereby achieving the effects of flattening folds of the uncoated region 101 and extending the uncoated region 101. Therefore, the risk of breakage of the electrode plate 100 in the subsequent cold-pressing procedure process is reduced, the production capacity of electrode plates 100 is improved, and thus the production efficiency of batteries is improved.

According to some embodiments of the present invention, the protrusion 12 has a complementary shape to the groove 22.

The wording "the protrusion 12 has a complementary shape to the groove 22"may be interpreted the protrusion 12 protrudes toward the groove 22, and when the uncoated region 101 is located between the protrusion 12 and the groove 22 and any position of the surface of the protrusion 12 acts on the uncoated region 101, the uncoated region 101 can be brought into close contact with the surface of the groove 22.

In the above solution, the uncoated region 101 is subjected to plastic deformation under the depressing tension from the protrusion 12 to fit the surface of the groove 22, so that the folds of the uncoated region 101 are effectively flattened, and the uncoated region 101 is extended.

According to some embodiments of the present invention, as shown in FIGS. 4 and 5, FIG. 5 is a schematic diagram of the protrusion 12 and the groove 22 for use in as system according to other embodiments of the present invention.

The surface of the protrusion 12 has an arc-shaped transition into the outer peripheral surface of the first body 11, and the surface of the groove 22 has an arc-shaped transition into the outer peripheral surface of the second body 21.

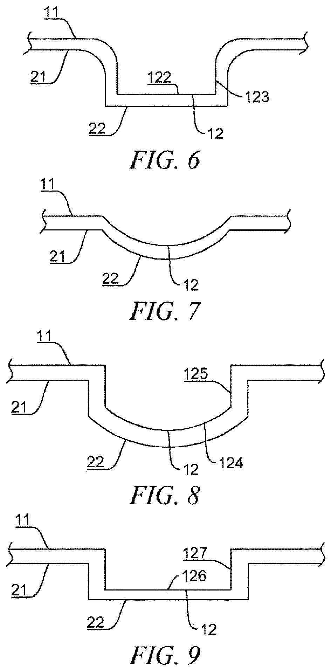

The wording "the surface of the protrusion 12 has an arc-shaped transition into the outer peripheral surface of the first body 11" may be interpreted the protrusion 12 protrudes from the surface of the first body 11, and a height difference between the protrusion and the first body is compensated by an arc-shaped structure. In FIGS. 7, 8 and 9, the transition between the surface of the protrusion 12 and the outer peripheral surface of the first body 11 is not arc-shaped transition, but may be regarded as right-angled transition. "The surface of the protrusion 12 having an arc-shaped transition into the outer peripheral surface of the first body 11" can be intuitively understood by comparing FIGS. 4, 5, 7, 8 and 9.

Similarly, the wording "the surface of the groove 22 has an arc-shaped transition into the outer peripheral surface of the second body 21" may be interpreted as: the groove 22 is recessed from the surface of the second body 21, and a height difference between the groove and the second body is compensated by an arc-shaped structure.

In the above solution, since the surface of the protrusion 12 has an arc-shaped transition into the outer peripheral surface of the first body 11, and the surface of the groove 22 has an arc-shaped transition into the outer peripheral surface of the second body 21, it is possible to avoid damage to the uncoated region 101 that is caused by a large height difference between the uncoated region and the coated region of the electrode plate 100 after the uncoated region is subjected to a depressing tension from the protrusion 12, ensuring the safety of the electrode plate 100.

In some embodiments, the protrusion 12 and the groove 22 may be in various shapes, including but not limited to: an arc-edge and round-cornered type, an arc-edge and right-angled type, an arc-edge and wide-angled type, a semi-straight-edge and round-cornered type, a straight-edge and round-cornered type, a straight-edge and right-angled type, etc.

The protrusion 12 and the groove 22 shown in FIG. 4 are of an arc-edge and round-cornered type. The term 'arc-edge' may be interpreted as: the protrusion 12 has a transition into the surface of the first body 11 via an arc edge, and the groove 22 has a transition into the surface of the second body 21 via an arc edge. By round-cornered is meant that the surface of the protrusion 12 facing the groove 22 is arc-shaped, and the surface of the groove 22 facing the protrusion 12 is arc-shaped.

The protrusion 12 and the groove 22 shown in FIG. 5 are of an arc-edge and wide-angled type. Taking the protrusion 12 as an example for illustration, by arc-edge and wide-angled is meant that the protrusion 12 has a transition into the first body 11 via arc edges, the protrusion 12 comprises a straight section 120 and arc sections 121, and the straight section 120 is connected to the arc edges via the arc sections 121.

Referring to FIG. 6, FIG. 6 is a schematic diagram of a protrusion 12 and a groove 22 of an arc-edge and right-angled type for use in as system according to some embodiments of the present invention. The protrusion 12 and the groove 22 shown in FIG. 6 are of the arc-edge and right-angled type. Taking the protrusion 12 as an example for illustration, by arc-edge and right-angled is meant that the protrusion 12 has a transition into the first body 11 via arc edges, the protrusion 12 comprises a first section 122 and second sections 123, the first section 122 and the second sections 123 are both straight sections, and the first section 122 is connected to the arc edges via the second sections 123.

Referring to FIG. 7, FIG. 7 is a schematic diagram of a protrusion 12 and a groove 22 of a semi-straight-edge and round-cornered type for use in as system according to some embodiments of the present invention. The protrusion 12 and the groove 22 shown in FIG. 7 are of the semi-straight-edge and round-cornered type. Taking the protrusion 12 as an example for illustration, the protrusion 12 is arc-shaped, and edges of the protrusion 12 are directly connected to the surface of the first body 11, without transition of an arc-shaped structure (arc edge) therebetween.

Referring to FIG. 8, FIG. 8 is a schematic diagram of a protrusion 12 and a groove 22 of a straight-edge and round-cornered type for use in as system according to some embodiments of the present invention. The protrusion 12 and the groove 22 shown in FIG. 8 are of the straight-edge and round-cornered type. Taking the protrusion 12 as an example for illustration, the protrusion 12 comprises an arc-shaped section 124 and straight edge sections 125, the straight edge sections 125 are located at two ends of the arc-shaped section 124, and the arc-shaped section 124 is connected to the surface of the first body 11 via the straight edge sections 125.

Referring to FIG. 9, FIG. 9 is a schematic diagram of a protrusion 12 and a groove 22 of a straight-edge and right-angled type for use in as system according to some embodiments of the present invention. The protrusion 12 and the groove 22 shown in FIG. 9 are of a straight-edge and right-angled type. Taking the protrusion 12 as an example for illustration, the protrusion 12 comprises a third section 126 and fourth sections 127, the fourth sections 127 are located at two ends of the third section 126, the fourth sections 127 are perpendicular to the third section 126, the third section 126 is connected to the surface of the first body 11 via the fourth sections 127, and the fourth sections 127 are perpendicular to the surface of the first body 11.

In some embodiments, when the surface of the protrusion 12 has an arc-shaped transition into the outer surface of the first body 11, that is, when a rounded angle is provided between the protrusion 12 and the first body 11, the rounded angle has a dimension of R (which can be seen in FIGS. 4 and 5), which satisfies 1 mm ≤ R ≤ 7 mm. In some embodiments, R may be 1 mm, 2 mm, 3 mm, 4 mm, 5 mm, 6 mm or 7 mm.

In the above solution, the rounded angle is provided between the protrusion 12 and the first body 11 to adapt to an electrode plate 100 with an insulating layer arranged between the uncoated region 101 and the coated region 102. By limiting the dimension range of the rounded angle to correspond to a dimension of the insulating layer, the insulating layer is prevented from being damaged when the protrusion 12 depresses the uncoated region 101.

According to some embodiments of the present invention, a dimension of the protrusion 12 in a length direction of the first roller 10 is W, which satisfies 20 mm ≤ W ≤ 80 mm.

The dimension of the protrusion 12 in the length direction of the first roller 10 is a width of the protrusion 12, and the width of the protrusion 12 corresponds to a width of the uncoated region 101, so that the protrusion 12 can act on any position of the uncoated region 101 when acting on the uncoated region 101. Uncoated regions 101 of electrode plates 100 of different specifications have different widths. Generally, the value range of the widths of the uncoated regions 101 of the electrode plates 100 of different specifications is 20 mm - 80 mm, and the value range of the width W of the protrusion 12 is defined to adapt to the electrode plates 100 of different specifications. Correspondingly, a dimension of the groove 22 in a length direction of the second roller 20 is consistent with the width of the protrusion 12.

In the above solution, the width of the protrusion 12 is greater than or equal to 20mm and less than or equal to 80 mm, so as to correspond to the widths of the uncoated regions 101 on the electrode plates 100 of different specifications. The value of the width (W) of the protrusions 12 may be 20 mm, 25 mm, 30 mm, 35 mm, 40 mm, 45 mm, 50 mm, 55 mm, 60 mm, 65 mm, 70 mm, 75 mm, or 80 mm.

In some embodiments, the width (W) of the protrusion 12 may be 20 mm to adapt to an uncoated region 101 with a width of 20 mm; the width (W) of the protrusion 12 may be 30 mm to adapt to an uncoated region 101 with a width of 30 mm; the width (W) of the protrusion 12 may be 50 mm to adapt to an uncoated region 101 with a width of 50 mm; and the width (W) of the protrusion 12 may be 60 mm to adapt to an uncoated region 101 with a width of 60 mm.

According to some embodiments of the present invention, referring to FIGS. 4 and 5, a dimension by which the protrusion 12 protrudes from the outer peripheral surface of the first body 11 is H, which satisfies 2 mm ≤ H ≤ 9 mm.

The dimension by which the protrusion 12 protrudes from the outer peripheral surface of the first body 11 is a height of the protrusion 12, and the height of the protrusion 12 corresponds to the extension rate of the uncoated region 101. Since a different extension rate of the uncoated region 101 is required to reach for each type of electrode plate 100, the protrusions 12 of different heights correspond to the uncoated regions 101 of different extension rates. The higher the height of the protrusion 12, the higher the extension rate of the uncoated region 101 after the protrusion 12 act on the uncoated region 101. Correspondingly, a dimension by which the groove 22 is recessed from the outer peripheral surface of the second body 21 is consistent with the height of the protrusion 12.

In the above solution, since a different extension rate of the uncoated region 101 is required to reach for the electrode plate 100 of each specification, the height range of the protrusion 12 is limited, the different heights of the protrusions 12 indicate different extension rates obtained after the uncoated region 101 is rolled by the protrusions 12, and the greater the height of the protrusion 12, the greater the extension rate. In some embodiments, the height (H) of the protrusion 12 may be 2 mm, 3 mm, 4 mm, 5 mm, 6 mm, 7 mm, 8 mm or 9 mm.

According to some embodiments of the present invention, referring to FIGS. 1, 2, and 10, FIG. 10 is a schematic diagram of an electrode plate 100 according to some embodiments of the present invention.

A plurality of protrusions 12 are provided, and the plurality of protrusions 12 are distributed at intervals in an axial direction of the first body 11. A plurality of grooves 22 are provided, the plurality of grooves 22 are distributed at intervals in an axial direction of the second body 21, and the grooves 22 are in one-to-one correspondence with the protrusions 12.

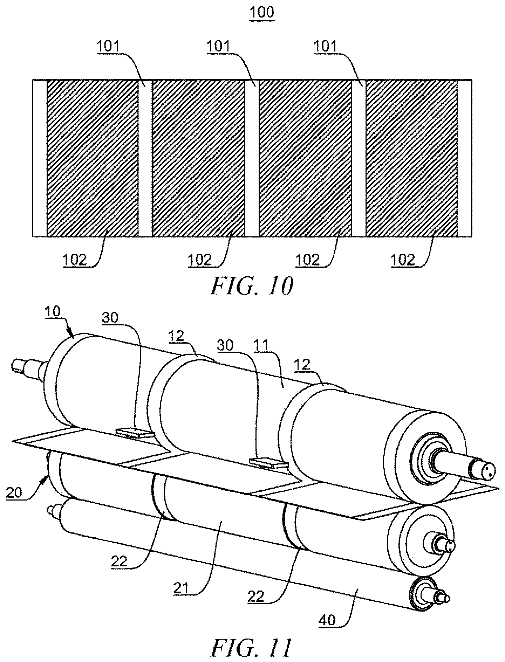

As shown in FIG. 10, in order to improve the coating efficiency, a roller coating process is adopted for coating in a stripe coating manner, so as to form a plurality of uncoated regions 101 arranged at intervals on the electrode plate 100. In the subsequent procedure, the electrode plate 100 is divided into a plurality of parts by cutting.

The plurality of protrusions 12 and the plurality of grooves 22 are provided to correspond to the plurality of uncoated regions 101 on a current collector.

In the above solution, by providing the plurality of protrusions 12 and the plurality of grooves 22 to roll the plurality of uncoated regions 101 on the electrode plate 100 simultaneously, the efficiency of solving the problems about folds and extension of the uncoated regions 101 is effectively improved, the production capacity of electrode plates 100 is improved, and thus the production efficiency of batteries is improved.

According to some embodiments of the present invention, referring to FIG. 2, the electrode plate extension device further comprises a heating portion 30. The heating portion 30 is configured to heat the uncoated region 101.

The heating portion 30 is a component capable of producing heat to heat the uncoated region 101.

When only the protrusion 12 and the groove 22 are used to act on the uncoated region 101, the exerted pressure is large, the tolerance (fracture tensile strength) of the uncoated region 101 is greatly reduced due to the limited ductility of the uncoated region 101, and a foil has high residual stress after calendering, which is not conducive to removal of folds and is likely to cause breakage in the subsequent cold-pressing procedure of the electrode plate 100. Especially when the uncoated region 101 has pinholes, bumpy spots, damaged edges, and other unavoidable problems arising from transportation, the extension effect of the uncoated region 101 is poor if the uncoated region 101 is pressed only by means of the protrusion 12 and the groove 22. For this reason, the uncoated region 101 is heated by the heating portion 30. After the uncoated region 101 is heated, the tensile strength is reduced, the flexibility is improved, and when the protrusion 12 and groove 22 act, the uncoated region 101 is easily extended and stretched under a small tension, reducing the risk of breakage.

In the above solution, by heating the uncoated region 101, the residual stress and tensile strength of the uncoated region 101 are reduced, and the flexibility is improved, so as to ensure that when the protrusion 12 and the groove 22 act on the uncoated region 101, the uncoated region 101 can be subjected to plastic deformation under a small depressing tension so as to be extended and stretched, then the folds of the uncoated region 101 are effectively flattened, the risk of breakage of the electrode plate 100 in the subsequent cold-pressing procedure is reduced, and the production capacity of electrode plates 100 is improved.

According to some embodiments of the present invention, referring to FIG. 2, the heating portion 30 is arranged inside the first body 11 and/or the second body 21.

The wording "the heating portion 30 is arranged inside the first body 11 and/or the second body 21" may be interpreted as: the heating portion 30 is arranged inside the first body 11; or the heating portion 30 is arranged inside the second body 21; or heating portions 30 are arranged inside the first body 11 and the second body 21 respectively.

In some embodiments, the heating portion 30 may be an inner heating roller arranged inside the first body 11 and/or the second body 21. The inner heating roller may be of a resistance heating structure.

The wording "the heating portion 30 is arranged inside the first body 11 and/or the second body 21" may also be interpreted as the heating portion 30 being part of the structure of the first roller 10; or the heating portion 30 being part of the structure of the second roller 20; or each of the first roller 10 and the second roller 20 having the heating portion 30. That is, when the electrode plate 100 passes between the first roller 10 and the second roller 20, the uncoated region 101 can be heated by the first roller 10 and/or the second roller 20. In some embodiments, a heating mode of the first roller 10 and/or the second roller 20 may be: a steam heating roller heating technology, a heat conduction oil heating roller heating technology, an electric heating pipe heating roller heating technology or a resistance wire heating roller heating technology. The steam heating roller heating technology, the heat conduction oil heating roller heating technology, the electric heating pipe heating roller heating technology or the resistance wire heating roller heating technology is an existing conventional roller heating technology, which will thus not be described in detail in the embodiments of the present invention.

In the above solution, when the electrode plate 100 passes between the first roller 10 and the second roller 20, the heating portion 30 located in the first body 11 and/or the second body 21 heats the uncoated region 101 by heating the protrusion 12 on the first body 11 or the groove 22 in the second body 21, so that the extension and stretching efficiency of the uncoated region 101 is improved (when the heating portions 30 are arranged on inner walls of the first body 11 and the second body 21 respectively, the first roller 10 and the second roller 20 can heat the uncoated region 101 simultaneously, so that the uncoated region 101 has a remarkable heating effect). Moreover, since the heating portion 30 is arranged inside the first body 11 and/or the second body 21, it is possible that the electrode plate extension device has a compact structure and a low space occupancy, thereby avoiding wasting space.

According to some other embodiments of the present invention, referring to FIG. 11, FIG. 11 is a perspective view of an electrode plate extension device for use in as system according to some other embodiments of the present invention. The heating portion 30 is independent of the first roller 10 and the second roller 20.

The wording "the heating portions 30 are independent of the first roller 10 and the second roller 20" may be interpreted as: the heating portion 30 is an independent component. In FIG. 11, two heating portions 30 are exemplarily drawn, and the two heating portions 30 are located above the uncoated regions 101 to heat the corresponding uncoated regions 101. In other embodiments, the heating portions 30 may be located below the uncoated regions 101.

In the above solution, since the heating portion 30 is independent of the first roller 10 and the second roller 20, it is possible to heat the uncoated region 101 independently, to ensure the heating effect of the uncoated regions 101. Moreover, since there is no need for the first roller 10 and the second roller 20 to be provided with the heating portion 30, the first roller 10 and the second roller 20 have a simple structure, and the manufacturing cost of the first roller 10 and the second roller 20 is effectively reduced.

According to some embodiments of the present invention, in a feeding direction of the electrode plate 100, the heating portion 30 is arranged upstream of the first roller 10 and the second roller 20.

The wording "the heating portion 30 is arranged upstream of the first roller 10 and the second roller 20" may be interpreted as: the electrode plate 100 passes through the heating portion 30 and then passes between the first roller 10 and the second roller 20. That is, the uncoated region 101 is firstly heated by the heating portion 30 and then rolled by the protrusion 12 and the groove 22.

In the above solution, as the electrode plate 100 passes between the first roller 10 and the second roller 20, the uncoated region 101 of the electrode plate 100 is heated by the heating portion 30, so that the residual stress and tensile strength of the uncoated region 101 are reduced, and the flexibility is improved. Therefore, when the protrusion 12 and the groove 22 act on the uncoated region 101, the uncoated region 101 can be subjected to plastic deformation under a small depressing tension so as to be extended and stretched, then the folds of the uncoated region 101 are effectively flattened, the risk of breakage of the electrode plate 100 in the subsequent cold-pressing procedure is reduced, and the production capacity of electrode plates 100 is improved.

According to some embodiments of the present invention, the heating portion 30 is a magnetic induction heating portion 30 or a far infrared heating portion 30.

The magnetic induction heating portion 30 heats the uncoated region 101 based on the principle of magnetic induction heating. The far infrared heating portion 30 heats the uncoated region 101 by means of infrared thermal radiation. The heating mode of the magnetic induction heating portion 30 or the far infrared heating portion 30 is an existing conventional heating mode, which will thus not be described in detail in the present application.

In the present invention, referring to FIGS. 1, 2 and 11, the electrode plate extension device further comprises a third roller 40. The third roller 40 is located on the side of the second roller 20 facing away from the first roller 10, and is configured to support the second roller 20.

A central axis of the third roller 40 is parallel to the central axis of the second roller 20. Generally, the first roller 10 is located above the second roller 20, and the second roller 20 is located above the third roller 40.

In the above solution, the third roller 40 is an idler roller, which is configured to support the weight of the second roller 20 and the first roller 10, so that the first roller 10 stably exerts a depressing tension to the uncoated region 101, and the effective plastic deformation of the uncoated region 101 is ensured.

According to some embodiments of the present invention, one of the first roller 10 and the second roller 20 is a driving roller and the other is a driven roller.

The driving roller is a roller capable of rotating actively, and the driven roller is a roller that follows the rotation under the action of the driving roller. Referring to FIG. 2, the first roller 10 is the driving roller, and the first roller 10 has a driving shaft in FIG. 2. Referring to FIG. 11, the second roller 20 is the driving roller, and the second roller 20 has a driving shaft in FIG. 11.

In the above solution, when the first roller 10 is the driving roller and the second roller 20 is the driven roller, the first roller 10 rotates actively to provide the depressing tension for the uncoated region 101, and the second roller 20 is rotated passively to provide support for the uncoated region 101. Alternatively, when the first roller 10 is the driven roller and the second roller 20 is the driving roller, the second roller 20 rotates actively, provides support for the uncoated region 101, and drives the first roller 10 to rotate such that the first roller 10 provides the depressing tension for the uncoated region 101.

According to some embodiments of the present invention, the electrode plate extension device further comprises: an adjusting mechanism (not shown) connected to the driving roller and configured to adjusting the tension exerted by the driving roller to the electrode plate 100.

In the above solution, by adjusting the tension exerted by the driving roller to the electrode plate 100 through the adjusting mechanism, it is possible to adjust the extension rate of the uncoated region 101, so as to adapt to the requirements of electrode plates 100 of different specifications.

According to some embodiments, the present invention further provides an electrode plate manufacturing apparatus, comprising the system described above and a cold-pressing device. The cold-pressing device is configured to cold-press an electrode plate 100, so as to complete a cold-pressing procedure of the electrode plate 100. The cold-pressing device is arranged downstream of the electrode plate extension device in a feeding direction of the electrode plate 100.

In the above solution, after an uncoated region 101 of the electrode plate 100 is subjected to extension and fold removal by the electrode plate extension device, it is possible to reduce the risk of breakage of the electrode plate 100 during cold-pressing in the cold-pressing device, thereby improving the production capacity of electrode plates 100.

According to some embodiments of the present invention referring to FIGS. 1 to 4, some embodiments of the present invention provide an electrode plate extension device that is located upstream of the cold-pressing device and configured to perform extension and fold removal on the uncoated region 101 of the electrode plate 100. The electrode plate extension device comprises a first roller 10, a second roller 20, and a third roller 40 arranged one above another. The electrode plate 100 passes through a gap between the first roller 10 and the second roller 20 so as to be fed. The third roller 40 is an idler roller for supporting the second roller 20, so as to ensure the stability of the first roller 10 and the second roller 20. The first roller 10 is a driving roller, and comprises a first body 11 and protrusions 12 (three protrusions 12 are provided, and the three protrusions 12 are arranged at intervals in an axial direction of the first body 11). The protrusions 12 are arranged on an outer peripheral surface of the first body 11 and extend in a circumferential direction of the first body 11. A heating portion 30 is arranged inside the first body 11, and the heating portion 30 can heat the first body 11 and the protrusions 12. The second roller 20 is a driven roller, and comprises a second body 21 and grooves 22. The grooves 22 are provided in an outer peripheral surface of the second body 21 and extend in a circumferential direction of the second body 21. A heating portion 30 is also arranged inside the second body 21, and the heating portion 30 can heat the second body 21 and the grooves 22. The heating portions 30 inside the first roller 10 and the second roller 20 are both electromagnetic heating rollers arranged inside the first body 11 and the second body 21 respectively. Since the first roller 10 and the second roller 20 both have the heating portions 30, the uncoated regions 101 of the electrode plate 100 can be heated when the electrode plate 100 passes between the first roller 10 and the second roller 20, and the flexibility of the uncoated region 101 is improved. In this way, during feeding of the electrode plate 100, the protrusions 12 act on the uncoated regions 101 and exert a certain depressing tension to calender the uncoated regions to fit the grooves 22, thereby achieving the effects of flattening folds and extending a foil, and reducing the breakage rate of the electrode plate 100 in the cold-pressing procedure. The protrusions 12 have the complementary shape to the grooves 22. The protrusions 12 and the grooves 22 are of an arc-edge and round-cornered type. A dimension W of the protrusions 12 in a length direction of the first roller 10 is 40 mm. The protrusions 12 protrude from the outer peripheral surface of the first body 11 by a dimension H of 4 mm. When rounded angles are provided between the protrusions 12 and the first body 11, a dimension R of the rounded angles is 1 mm.

According to some embodiments of the present invention, referring to FIGS. 5 and 11, some embodiments of the present application provide an electrode plate extension device that is located upstream of the cold-pressing device and configured to perform extension and fold removal on the uncoated region 101 of the electrode plate 100. The electrode plate extension device comprises a first roller 10, a second roller 20, and a third roller 40 arranged one above another. The electrode plate 100 passes through a gap between the first roller 10 and the second roller 20 so as to be fed. The third roller 40 is an idler roller for supporting the second roller 20, so as to ensure the stability of the first roller 10 and the second roller 20. The first roller 10 is a driven roller, and comprises a first body 11 and protrusions 12 (two protrusions 12 are provided, and the two protrusions 12 are arranged at intervals in an axial direction of the first body 11). The protrusions 12 are arranged on an outer peripheral surface of the first body 11 and extend in a circumferential direction of the first body 11. The second roller 20 is a driving roller and comprises a second body 21 and grooves 22. The grooves 22 are provided in an outer peripheral surface of the second body 21 and extend in a circumferential direction of the second body 21. The electrode plate extension device further comprises heating portions 30. The heating portions 30 are magnetic induction heating portions 30, for heating the uncoated regions 101 independently of the first roller 10 and the second roller 20. The heating portions 30 are located upstream of the first roller 10 and the second roller 20, so that the uncoated regions 101 are heated before the electrode plate 100 passes between the first roller 10 and the second roller 20, and the flexibility of the uncoated regions 101 is improved. In this way, during feeding of the electrode plate 100, the protrusions 12 act on the uncoated regions 101 and exert a certain depressing tension to calender the uncoated regions to fit the grooves 22, thereby achieving the effects of flattening folds and extending a foil, and reducing the breakage rate of the electrode plate 100 in the cold-pressing procedure. The protrusions 12 have the complementary shape to the grooves 22. The protrusions 12 and the grooves 22 are of an arc-edge and wide-angled type. A dimension W of the protrusions 12 in a length direction of the first roller 10 is 50 mm. The protrusions 12 protrude from the outer peripheral surface of the first body 11 by a dimension H of 5 mm. When rounded angles are provided between the protrusions 12 and the first body 11, a dimension R of the rounded angles is 3 mm.

The foregoing descriptions are merely preferred embodiments of the present invention, but are not intended to limit the present invention. For those skilled in the art, the present invention may have various modifications and variations within the scope defined by the appended claims.

## Claims

1. A system comprising an electrode plate extension device and an electrode plate, wherein
the electrode plate comprises a coated region coated with an active material layer and an uncoated region; and
the electrode plate extension device comprises:
a first roller (10), comprising a first body (11) and a protrusion (12), the protrusion (12) being provided on an outer peripheral surface of the first body (11) and extending in a circumferential direction of the first body (11); and
a second roller (20), comprising a second body (21) and a groove (22), the groove (22) being provided in an outer peripheral surface of the second body (21) and extending in a circumferential direction of the second body (21),
wherein the first roller (10) and the second roller (20) are arranged in parallel, a gap for allowing the passage of the electrode plate (100) is formed between the first roller (10) and the second roller (20), the protrusion (12) is positioned corresponding to the groove (22), and the protrusion (12) is configured to press against the uncoated region (101) of the electrode plate (100) to cause a plastic deformation of the uncoated region (101); the system being **characterized in that**
the electrode plate extension device further comprises a third roller (40), located on the side of the second roller (20) facing away from the first roller (10), and configured to support the second roller (20).

2. The system according to claim 1, wherein
the protrusion (12) has a complementary shape to the groove (22).

3. The system according to claim 1 or 2, wherein
a surface of the protrusion (12) has an arc-shaped transition into the outer peripheral surface of the first body (11), and a surface of the groove (22) has an arc-shaped transition into the outer peripheral surface of the second body (21).

4. The system according to any one of claims 1-3, wherein
a dimension of the protrusion (12) in a length direction of the first roller (10) is W, which satisfies 20 mm ≤ W ≤ 80 mm.

5. The system according to any one of claims 1-4, wherein
a dimension by which the protrusion (12) protrudes from the outer peripheral surface of the first body (11) is H, which satisfies 2 mm ≤ H ≤ 9 mm.

6. The system according to any one of claims 1-5, wherein
a plurality of protrusions (12) are provided, which are distributed at intervals in an axial direction of the first body (11); and
a plurality of grooves (22) are provided, which are distributed at intervals in an axial direction of the second body (21), and which are in one-to-one correspondence with the protrusions (12).

7. The system according to any one of claims 1-6, wherein the electrode plate extension device further comprises:
a heating portion (30), configured to heat the uncoated region (101).

8. The system according to claim 7, wherein
the heating portion (30) is arranged inside the first body (11) and/or the second body (21).

9. The system according to claim 7, wherein
the heating portion (30) is independent of the first roller (10) and the second roller (20).

10. The system according to claim 9, wherein
in a feeding direction of the electrode plate (100), the heating portion (30) is arranged upstream of the first roller (10) and the second roller (20).

11. The system according to claim 9 or 10, wherein
the heating portion (30) is a magnetic induction heating portion (30) or a far infrared heating portion (30).

12. The system according to any one of claims 1-11, wherein
one of the first roller (10) and the second roller (20) is a driving roller and the other is a driven roller.

13. The system according to claim 12, wherein the electrode plate extension device further comprises:
an adjusting mechanism, connected to the driving roller and configured to adjust a tension exerted by the driving roller to the electrode plate (100).

14. An electrode plate manufacturing apparatus, comprising:
an system of any one of claims 1-13; and
a cold-pressing device, configured to cold-press an electrode plate (100), the cold-pressing device being arranged downstream of the electrode plate extension device in a feeding direction of the electrode plate (100).

## Patentansprüche

1. System, umfassend eine Elektrodenplattenerweiterungsvorrichtung und eine Elektrodenplatte, wobei
die Elektrodenplatte eine beschichtete Region, die mit einer aktiven Materialschicht beschichtet ist, und eine unbeschichtete Region umfasst; und
die Elektrodenplattenerweiterungsvorrichtung umfasst:
eine erste Walze (10), umfassend einen ersten Körper (11) und einen Vorsprung (12), wobei der Vorsprung (12) an einer äußeren Umfangsoberfläche des ersten Körpers (11) bereitgestellt ist und sich in einer Umfangsrichtung des ersten Körpers (11) erstreckt; und
eine zweite Walze (20), umfassend einen zweiten Körper (21) und eine Nut (22), wobei die Nut (22) in einer äußeren Umfangsoberfläche des zweiten Körpers (21) bereitgestellt ist und sich in einer Umfangsrichtung des zweiten Körpers (21) erstreckt,
wobei die erste Walze (10) und die zweite Walze (20) parallel angeordnet sind, ein Spalt zum Ermöglichen des Durchgangs der Elektrodenplatte (100) zwischen der ersten Walze (10) und der zweiten Walze (20) ausgebildet ist, der Vorsprung (12) entsprechend der Nut (22) positioniert ist, und der Vorsprung (12) konfiguriert ist, um gegen die unbeschichtete Region (101) der Elektrodenplatte (100) zu drücken, um eine plastische Verformung der unbeschichteten Region (101) zu bewirken; wobei das System **dadurch gekennzeichnet ist, dass** die Elektrodenplattenerweiterungsvorrichtung ferner eine dritte Walze (40) umfasst, die sich auf der von der ersten Walze (10) abgewandten Seite der zweiten Walze (20) befindet und konfiguriert ist, um die zweite Walze (20) zu tragen.

2. System nach Anspruch 1, wobei
der Vorsprung (12) eine komplementäre Form zu der Nut (22) hat.

3. System nach Anspruch 1 oder 2, wobei
eine Oberfläche des Vorsprungs (12) einen bogenförmigen Übergang in die äußere Umfangsoberfläche des ersten Körpers (11) und eine Oberfläche der Nut (22) einen bogenförmigen Übergang in die äußere Umfangsoberfläche des zweiten Körpers (21) hat.

4. System nach einem der Ansprüche 1 bis 3, wobei
eine Abmessung des Vorsprungs (12) in einer Längsrichtung der ersten Walze (10) W ist, die 20 mm ≤ W ≤ 80 mm erfüllt.

5. System nach einem der Ansprüche 1 bis 4, wobei
eine Abmessung, um die der Vorsprung (12) aus der äußeren Umfangsoberfläche des ersten Körpers (11) herausragt, H ist, die 2 mm ≤ H ≤ 9 mm erfüllt.

6. System nach einem der Ansprüche 1 bis 5, wobei
eine Vielzahl von Vorsprüngen (12) bereitgestellt sind, die in einer axialen Richtung des ersten Körpers (11) in Abständen verteilt sind; und
eine Vielzahl von Nuten (22) bereitgestellt sind, die in einer axialen Richtung des zweiten Körpers (21) in Abständen verteilt sind und die in eins-zu-eins-Entsprechung mit den Vorsprüngen (12) stehen.

7. System nach einem der Ansprüche 1 bis 6, wobei die Elektrodenplattenerweiterungsvorrichtung ferner umfasst:
einen Heizabschnitt (30), der konfiguriert ist, um die unbeschichtete Region (101) zu erwärmen.

8. System nach Anspruch 7, wobei
der Heizabschnitt (30) innerhalb des ersten Körpers (11) und/oder des zweiten Körpers (21) angeordnet ist.

9. System nach Anspruch 7, wobei
der Heizabschnitt (30) unabhängig von der ersten Walze (10) und der zweiten Walze (20) ist.

10. System nach Anspruch 9, wobei
in einer Vorschubrichtung der Elektrodenplatte (100) der Heizabschnitt (30) stromaufwärts von der ersten Walze (10) und der zweiten Walze (20) angeordnet ist.

11. System nach Anspruch 9 oder 10, wobei
der Heizabschnitt (30) ein magnetischer Induktionsheizabschnitt (30) oder ein Ferninfrarotheizabschnitt (30) ist.

12. System nach einem der Ansprüche 1 bis 11, wobei
eine der ersten Walze (10) und der zweiten Walze (20) eine Antriebswalze und die andere eine angetriebene Walze ist.

13. System nach Anspruch 12, wobei die
Elektrodenplattenerweiterungsvorrichtung ferner umfasst:
einen Einstellmechanismus, der mit der Antriebswalze verbunden und konfiguriert ist, um eine von der Antriebswalze auf die Elektrodenplatte (100) ausgeübte Spannung anzupassen.

14. Elektrodenplattenherstellungseinrichtung, umfassend:
ein System nach einem der Ansprüche 1 bis 13; und
eine Kaltpressvorrichtung, die konfiguriert ist, um eine Elektrodenplatte (100) kalt zu pressen, wobei die Kaltpressvorrichtung stromabwärts von der Elektrodenplattenerweiterungsvorrichtung in einer Vorschubrichtung der Elektrodenplatte (100) angeordnet ist.

## Revendications

1. Système comprenant un dispositif d'extension de plaque d'électrode et une plaque d'électrode, dans lequel
la plaque d'électrode comprend une région revêtue revêtue d'une couche de matériau actif et une région non revêtue ; et
le dispositif d'extension de plaque d'électrode comprend :
un premier rouleau (10), comprenant un premier corps (11) et une saillie (12), la saillie (12) étant fournie sur une surface périphérique externe du premier corps (11) et s'étendant dans une direction circonférentielle du premier corps (11) ; et
un deuxième rouleau (20), comprenant un deuxième corps (21) et une rainure (22), la rainure (22) étant fournie sur une surface périphérique externe du deuxième corps (21) et s'étendant dans une direction circonférentielle du deuxième corps (21),
dans lequel le premier rouleau (10) et le deuxième rouleau (20) sont agencés en parallèle, un espace destiné à permettre le passage de la plaque d'électrode (100) est ménagé entre le premier rouleau (10) et le deuxième rouleau (20), la saillie (12) est positionnée en correspondance par rapport à la rainure (22), et la saillie (12) est conçue pour presser contre la région non revêtue (101) de la plaque d'électrode (100) pour provoquer une déformation plastique de la région non revêtue (101) ; le système étant **caractérisé en ce que**
le dispositif d'extension de plaque d'électrode comprend en outre un troisième rouleau (40), situé sur le côté du deuxième rouleau (20) orienté à l'opposé du premier rouleau (10), et conçu pour soutenir le deuxième rouleau (20).

2. Système selon la revendication 1, dans lequel
la saillie (12) a une forme complémentaire de celle de la rainure (22).

3. Système selon la revendication 1 ou 2, dans lequel
une surface de la saillie (12) comporte une transition en forme d'arc dans la surface périphérique externe du premier corps (11), et une surface de la rainure (22) comporte une transition en forme d'arc dans la surface périphérique externe du deuxième corps (21).

4. Système selon l'une quelconque des revendications 1 à 3, dans lequel
une dimension de la saillie (12) dans une direction de longueur du premier rouleau (10) est W, qui satisfait 20 mm ≤ W ≤ 80 mm.

5. Système selon l'une quelconque des revendications 1 à 4, dans lequel
une dimension par laquelle la saillie (12) fait saillie depuis la surface périphérique externe du premier corps (11) est H, qui satisfait 2 mm ≤ H ≤ 9 mm.

6. Système selon l'une quelconque des revendications 1 à 5, dans lequel
une pluralité de saillies (12) sont fournies, lesquelles sont distribuées selon des intervalles dans une direction axiale du premier corps (11) ; et
une pluralité de rainures (22) sont fournies, lesquelles sont distribuées selon des intervalles dans une direction axiale du deuxième corps (21), et lesquelles sont en correspondance biunivoque avec les saillies (12).

7. Système selon l'une quelconque des revendications 1 à 6, dans lequel le dispositif d'extension de plaque d'électrode comprend en outre :
une partie de chauffage (30), conçue pour chauffer la région non revêtue (101).

8. Système selon la revendication 7, dans lequel
la partie de chauffage (30) est agencée à l'intérieur du premier corps (11) et/ou du deuxième corps (21).

9. Système selon la revendication 7, dans lequel
la partie de chauffage (30) est indépendante du premier rouleau (10) et du deuxième rouleau (20).

10. Système selon la revendication 9, dans lequel
dans une direction d'alimentation de la plaque d'électrode (100), la partie de chauffage (30) est agencée en amont du premier rouleau (10) et du deuxième rouleau (20).

11. Système selon la revendication 9 ou 10, dans lequel
la partie de chauffage (30) est une partie de chauffage par induction magnétique (30) ou une partie de chauffage par infrarouge lointain (30).

12. Système selon l'une quelconque des revendications 1 à 11, dans lequel
l'un du premier rouleau (10) et du deuxième rouleau (20) est un rouleau menant et l'autre et un rouleau mené.

13. Système selon la revendication 12, dans lequel le dispositif d'extension de plaque d'électrode comprend en outre :
un mécanisme de réglage, relié au rouleau menant et conçu pour régler une tension exercée par le rouleau menant sur la plaque d'électrode (100).

14. Appareil de fabrication de plaque d'électrode, comprenant :
un système selon l'une quelconque des revendications 1 à 13 ; et
un dispositif de pressage à froid, conçu pour presser à froid une plaque d'électrode (100), le dispositif de pressage à froid étant agencé en aval du dispositif d'extension de plaque d'électrode dans une direction d'alimentation de la plaque d'électrode (100).
